# EUROPÄISCHE PATENTSCHRIFT

(11) **EP 0 982 529 B1**
(45) Veröffentlichungstag und Bekanntmachung des Hinweises auf die Patenterteilung: **14.05.2003**
(21) Anmeldenummer: 99112448.8
(22) Anmeldetag: 30.06.1999
(51) Int. Cl.: F16T 1/08

(54) **Bimetallgesteuerter Kondensatableiter mit der Sattdampfkurve angepasster Schliesskraftlinie**
Bimetal steam trap with a closing force line adapted to the saturated steam curve
Purgeur de vapeur à commande bimétallique avec une ligne de force de fermeture adaptée à la courbe de la vapeur saturée

(30) Priorität: 28.08.1998 DE 19839298
(43) Veröffentlichungstag der Anmeldung: 01.03.2000
(73) Patentinhaber: GESTRA GmbH, 28215 Bremen (DE)
(72) Erfinder: Klann, Holm, 28357 Bremen (DE)
(74) Vertreter: Eisenführ, Speiser & Partner

(56) Entgegenhaltungen:
- DE-B- 1 261 127

## Beschreibung

Die Erfindung betrifft einen bimetallgesteuerten Kondensatableiter der im Oberbegriff der unabhängigen Ansprüche spezifizierten Art.

Ein bekannter derartiger Kondensatableiter (DE AS 1 183 098) weist ein Steuerorgan mit mehreren kreisrunden Bimetallplatten auf. Durch radiale Schlitze in den Bimetallplatten werden Wirkarme gebildet, an deren Enden sich die Bimetallplatten abstützen. Die Bimetallplatten weisen bei ansonsten gleichen Abmessungen unterschiedliche Schlitzlängen auf, d. h. es sind Bimetallplatte mit längeren sowie Bimetallplatten mit kürzeren Schlitzen und somit kürzeren Wirkarmen vorhanden. Die Wirkarme einer Bimetallplatte sind jeweils alle gleich lang. Aufgrund der unterschiedlichen Bimetallplatten hat das Steuerorgan eine Schließkraftkennlinie, deren Verlauf der Sattdampfkurve des abzuleitenden Kondensats angepasst ist. Ein wesentlicher Nachteil dieses bekannten Kondensatableiters besteht in der Notwendigkeit unterschiedlicher Bimetallplatten.

Bei einem anderen bekannten Kondensatableiter (DE AS 1 261 217, DE GM 1 917 348) weisen die Wirkarme der Bimetallplatten unterschiedliche Längen auf. Jede Bimetallplatte hat dadurch bereits eine an die Sattdampfkurve angepasste Schließkraftkennlinie. Allerdings sind diese Bimetallplatten sehr groß und ausladend. Dementsprechend benötigt dieser Kondensatableiter ein großes Gehäuse.

Der Erfindung liegt die Aufgabe zugrunde, einen Kondensatableiter der eingangs genannten Art mit kleinbauenden Bimetallplatten zu schaffen, ohne dass dazu eine Vielzahl verschiedener Bimetallplatten vonnöten ist.

Diese Aufgabe wird durch die in den Ansprüchen 1 und 5 angegebenen Merkmale gelöst.

Aufgrund des Höhenversatzes der Abstützflächen haben die Wirkarme auf den Verlauf der Schließkraftlinie unterschiedlichen Einfluss. Ohne dass große Längenunterschiede zwischen den Wirkarmen erforderlich sind, weisen die Bimetallplatten jede für sich eine dem Verlauf der Sattdampfkurve angepasste Schließkraftlinie auf. Bimetallplatten unterschiedlicher Gestaltung sind dafür nicht erforderlich. Bei kleinen Baumaßen können die Bimetallplatten eine große Schließkraft ausüben.

Die Unteransprüche haben vorteilhafte Weiterbildungen der Erfindung zum Gegenstand.

Durch Ergänzung des Kondensatableiters um die Merkmale des Anspruchs 8 lässt sich eine gute Anpassung der Schließkraftlinie der Bimetallplatten an die Sattdampfkurve über einen besonders großen Druckbereich erzielen, ohne dass es hierzu großer, ausladender Bimetallplatten bedarf. Die Schlitze stellen nur geringe Ausnehmungen in den Bimetallplatten dar, sodass trotz kleiner Plattenabmessungen eine relativ große aktive Plattenfläche vorhanden ist. Dementsprechend groß ist die sich ausbildende Schließkraft.

Nach Anspruch 9 kommen zunächst die schmalen Wirkarme voreilend vor den übrigen zur Wirkung. Die Schließkraftzunahme erfordert einen relativ großen Temperaturanstieg. Dies führt zu einer besonders gut an die im Bereich niedriger Drücke steil ansteigende Sattdampfkurve angepasste Schließkraftlinie der Bimetallplatten.

Nach den Merkmalen des Anspruchs 10 weisen die quer zu den anderen verlaufenden Wirkarme der Bimetallplatten eine deutlich höhere Steifigkeit auf als die vorstehend genannten schmaleren Wirkarme. Sie kommen bei höheren Temperaturen additiv zu den schmaleren zur Wirkung. Ein Temperaturanstieg führt dadurch zu einem stärkeren Anstieg der Schließkraft. Die Schließkraftlinie der Bimetallplatten verläuft daher mit einer flacheren, der Sattdampfkurve bei den entsprechenden Temperaturen besser angepassten Steigung. Bei noch höheren Temperaturen kommen schließlich auch die vier kürzeren Wirkarme zur Wirkung. Auch dies geschieht additiv, sodass bei weiterem Temperaturanstieg die Schließkraftzunahme entsprechend größer ist und die Steigung der Schließkraftlinie nochmals abflacht. Damit ist über einen sehr großen Druck- und Temperaturbereich eine gute Anpassung der Schließkraftlinie an die Sattdampfkurve gewährleistet. Ergänzend sind hierbei die Merkmale des Anspruchs 11 von Vorteil.

Eine gut angepasste Schließkraftlinie sowie eine im Verhältnis zu den Abmessungen der Bimetallplatten besonders große Schließkraft vereinen die Merkmale des Anspruchs 12. Auch die Merkmale des Anspruchs 13 wirken sich darauf positiv aus. Zugleich sind in einfacher Weise die Seiten der äußeren gleichgerichteten Wirkarme und die der quer dazu verlaufenden Wirkarme gebildet.

Gemäß Anspruch 2 ist der Höhenversatz der Abstützflächen unmittelbar an den Bimetallplatten mittels Vorsprüngen vorgesehen. Durch die Vorsprünge sind die Abstützflächen exakt definiert. Sie lassen sich nach den Merkmalen des Anspruchs 3 besonders vorteilhaft durch Prägen der Enden der Wirkarme realisieren. Alternativ kann der Höhenversatz der Abstützflächen mit Zwischenlegeelementen erreicht werden, wie es der Anspruch 5 vorsieht.

Besonders vorteilhaft ist es, wenn der Höhenversatz, wie es der Anspruch 14 bestimmt, nur einen Bruchteil der Dicke der Bimetallplatte beträgt. Die Anpassung der Schließkraftlinie an die Sattdampfkurve wird damit erzielt. Die Verformung der Bimetallplatten ist dabei so gering, dass keine nachteiligen Spannungen in ihnen auftreten.

Die Anordnung der Bimetallplatten entsprechend den Ansprüchen 4 und 7 ergibt einen großen Arbeitshub des Steuerorgans. Die Merkmale des Anspruchs 15 führen zu einem großen schlitzfreien zentralen Abschnitt der Bimetallplatten was sich gleichfalls vorteilhaft auf den Arbeitshub auswirkt. Der Anspruch 16 ermöglicht in einfacher Weise eine Verdrehsicherung der Bimetallplatten, ohne dass dadurch die Schließkraftlinie oder die Lebensdauer der Bimetallplatten beeinträchtigt wird.

In den Zeichnungen sind zwei Ausführungsbeispiele der erfindungsgemäßen Kondensatableiter dargestellt. Die Fig. 3, 4 und 7 -10 weisen einen anderen Maßstab auf als die Fig. 1 und 2. Die Fig. 5 und 11 weisen demgegenüber einen noch anderen Maßstab auf. Es zeigt
- Fig. 1: den Kondensatableiter im Längsschnitt in Offenstellung,
- Fig. 2: eine Bimetallplatte des Steuerorgans in Draufsicht, und zwar die Seite konkaver Durchwölbung,
- Fig. 3: zwei übereinandergeschichtete Bimetallplatten des Steuerorgans im kalten Zustand in Ansicht A,
- Fig. 4: die Bimetallplatten aus Fig. 3 im kalten Zustand in Ansicht B,
- Fig. 5: einen Ausschnitt des rechten Teilbereichs der Bimetallplatten aus Fig. 4,
- Fig. 6: ein Diagramm mit der Sattdampfkurve des abzuleitenden Kondensats und der Schließkraftlinie des Steuerorgans,
- Fig. 7: die Bimetallplatten aus Fig. 4 bei niedrigem Betriebsdruck und Kondensatableiter in Schließstellung,
- Fig. 8: die Bimetallplatten aus Fig. 4 bei mittlerem Betriebsdruck und Kondensatableiter in Schließstellung,
- Fig.9: die Bimetallplatten aus Fig. 4 bei hohem Betriebsdruck und Kondensatableiter in Schließstellung,
- Fig. 10: zwei übereinandergeschichtete Bimetallplatten des Steuerorgans im kalten Zustand in anderer Ausführung und mit einem Zwischenlegeelement und
- Fig. 11: einen Ausschnitt des rechten Teilbereichs der Bimetallplatten aus Fig. 10.

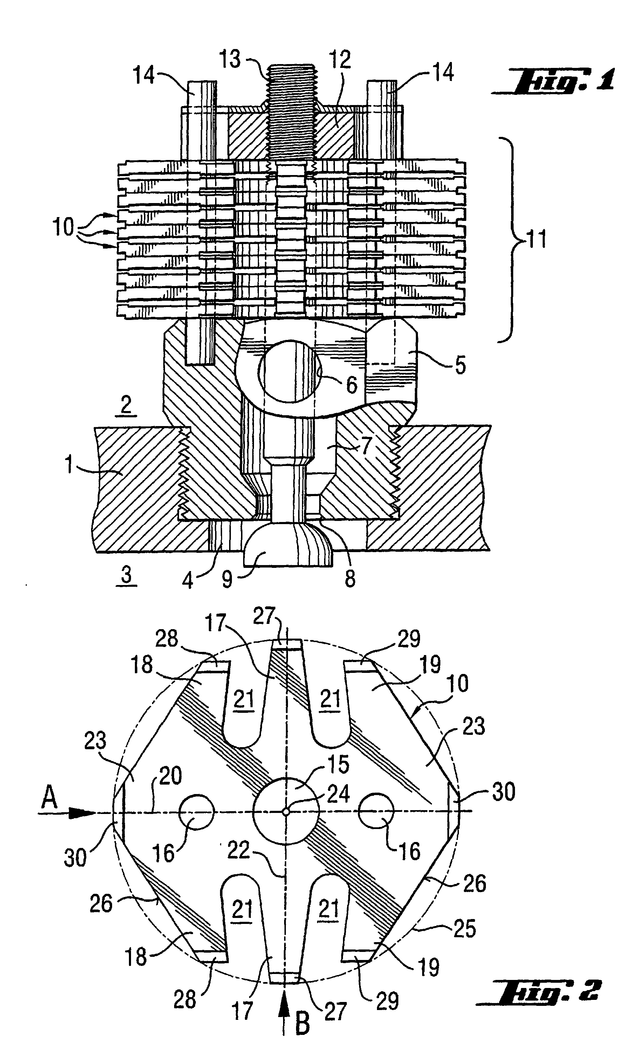

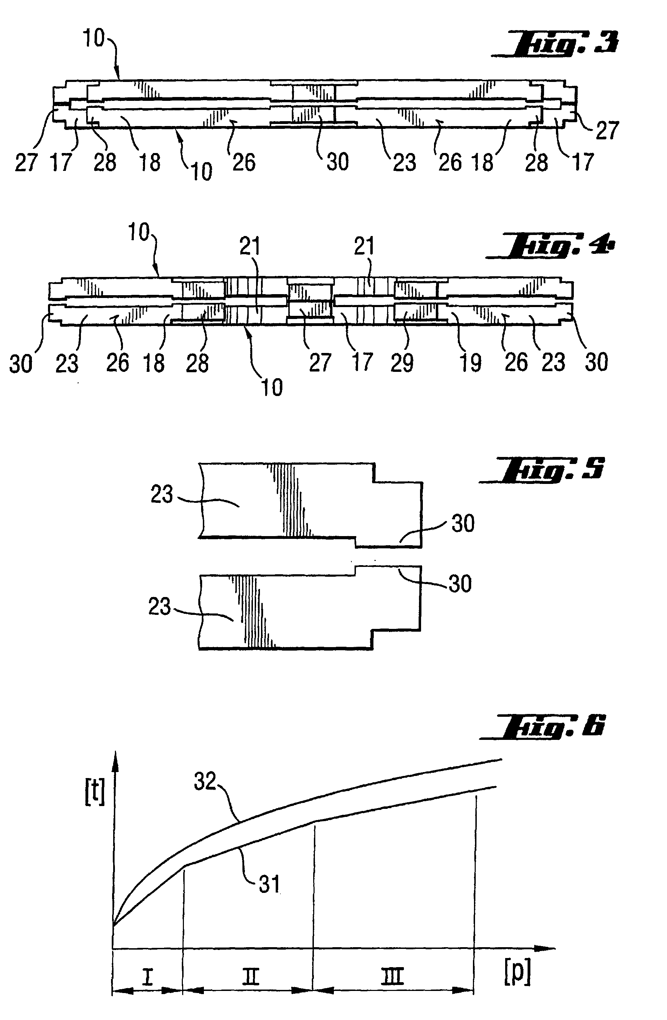

In Fig. 1 weist eine Trennwand 1 zwischen der Vordruckseite 2 und der Niederdruckseite 3 eines nicht dargestellten Ableitergehäuses eine Verbindungsbohrung 4 auf, in der eine Sitzbuchse 5 angeordnet ist. Die Sitzbuchse 5 weist mindestens eine seitliche Zuflussbohrung 6 auf, die in eine Längsbohrung 7 der Sitzbuchse 5 einmündet. An letzterer ist ein der Niederdruckseite 3 zugewandter Ventilsitz 8 vorgesehen, mit dem ein vom Vordruck im Öffnungssinn belastetes Verschlussteil 9 zusammenwirkt im Schließsinn wirkt ein mehrere Bimetallplatten 10 aufweisendes Steuerorgan 11 auf das Verschlussteil 9 ein. Die Bimetallplatten 10 sind so übereindergeschichtet, dass sie sich bei Erwärmung gegenläufig durchwölben. An seinem einen Ende stützt sich das Steuerorgan 11 mit der sich konvex wölbenden Seite der dortigen Bimetallplatte auf der Sitzbuchse 5 ab. Mit seinem anderen Ende wirkt das Steuerorgan 11 mit der sich konvex wölbenden Seite der dortigen Bimetallplatte über einem Mitnehmer 12 sowie einen Hubschaft 13 auf das Verschlussteil 9 ein. Der Hubschaft 13 erstreckt sich zentral längs durch das Steuerorgan 11. Parallel zum Hubschaft 13 erstrecken sich zwei an der Sitzbuchse 5 angeordnete Führungsstifte 14 zur verdrehsicheren Führung der Bimetallplatten 10 durch das Steuerorgan 11. Zu diesem Zweck weisen die Bimetallplatten 10 eine Zentralbohrung 15 für den Hubschaft 13 und zwei Führungsbohrungen 16 für die Führungsstifte 14 auf (Fig. 2).

Zur Bildung von Wirkarmen 17 - 19 sind die Bimetallplatten 10 beiderseits einer ersten in der Plattenebene verlaufenden Mittellinie 20 und im wesentlichen quer zu ihr jeweils mit zwei Schlitzen 21 versehen. Beiderseits der ersten Mittellinie 20 weisen die Bimetallplatten 10 dadurch jeweils nebeneinander drei im wesentlichen quer zur ersten Mittellinie 20 verlaufende Wirkarme 17 - 19 auf; sie sind im wesentlichen gleichgerichtet. Die beiden einander diametral gegenüberliegenden mittleren Wirkarme 17 sind auf einer zweiten, zur ersten quer verlaufenden Mittellinie 22 angeordnet. Die beiden einander diametral gegenüberliegenden äußeren Wirkarme 18 gleichen den beiden anderen einander diametral gegenüberliegenden äußere Wirkarmen 19 spiegelbildlich. Entlang der ersten Mittellinie 20 weisen die Bimetallplatten 10 einen schlitzfreien Bereich auf, dessen Breite größer ist als die Länge jedes der Schlitze 21. Beiderseits der zweiten Mittellinie 22 befinden sich in diesem Bereich auf der ersten Mittellinie 20 die Führungsbohrungen 16. Ferner weisen die Bimetallplatten 10 auf der ersten Mittellinie 20 zwei einander diametral gegenüberliegende Wirkarme 23 auf. Sie verlaufen zueinander entgegengesetzt und zu den zuvor genannten Wirkarmen 17- 19 im wesentlichen quer.

Alle Wirkarme 17-19, 23 weisen eine solche Länge auf, dass ihre Enden an einen um den Mittelpunkt 24 der Bimetallplatten 10 geschlagenen Kreis 25 heranreichen. Die äußeren Wirkarme 18, 19 sind die kürzesten aller Wirkarme 17 - 19 und die Stirnflächen ihrer Enden verlaufen parallel zur ersten Mittellinie 20. Zwischen den Enden der äußeren Wirkarme 18, 19 und den quer dazu verlaufenden Wirkarmen 23 ist die Außenkontur der Bimetallplatten 10 als schräg zur ersten Mittellinie 20 verlaufende Gerade 26 ausgebildet. Bei allen Wirkarmen 17 - 19, 23 nimmt die Breite zum Plattenrand hin ab, was sich günstig auf die Spannungsverteilung in den Wirkarmen auswirkt. Die mittleren 17 der drei Wirkarme 17 - 19 weisen die geringste und die quer dazu verlaufenden Wirkarme 23 die größte Breite aller Wirkarme 17- 19, 23 auf.

Die Wirkarme 17 - 19, 23 der Bimetallplatten 10 weisen an ihren äußeren Enden auf der Seite konkaver Durchwölbung Vorsprünge 27 - 30 auf, als Abstützflächen für die Wirkarme 17 - 19, 23. Die Abstützflächen der mittleren, schmalen Wirkarme 17 sind gegenüber den Abstützflächen der übrigen Wirkarme 18, 19, 23 höhenversetzt, sie stehen gegenüber den anderen Abstützflächen vor. Mit anderen Worten: Die Vorsprünge 27 der mittleren, schmalen Wirkarme 17 weisen, bezogen auf die Ebene der Bimetallplatten 10, eine größere Höhe auf als die Vorsprünge 28 - 30 der übrigen Wirkarme 18, 19, 23. Die Höhe der Vorsprünge 27 - 30, die durch Prägen der Enden der Wirkarme 17- 19, 23 erzeugt sind und damit auch der Höhenversatz zwischen ihnen, beträgt nur einen Bruchteil der Dicke der Bimetallplatten 10 (Fig. 5). Durch diese geringe Höhe werden störende Spannungen in den Wirkarmen 17- 19, 23 vermieden und sie sind zur Erzielung der gewünschten Schließkraftlinie 31 ausreichend.

Die Bimetallplatten 10 sind in ihrer Fläche (Fig. 2) sowohl zu der ersten Mittellinie 20 als auch zu der zweiten Mittellinie 22 symmetrisch ausgebildet. Die symmetrisch gestalteten Bimetallplatten 10 sind so übereinandergeschichtet, dass ihre sich konkav wölbenden Seiten einander zugewandt sind und jeweils gleiche Wirkarme 17 - 19, 23 mit ihren Vorsprüngen 27 - 30 einander gegenüberliegen. Durch die Führungsstifte 14 ist diese Relativstellung der Bimetallplatten 10 zueinander bleibend gewährleistet.

Der Kondensatableiter ist in einem großen Druckbereich (Fig. 6) einsetzbar. Dies bezieht sich auf den Betriebsdruck, der auf der Vordruckseite 2 im Kondensatableiter herrscht. Der Druckbereich ist in Teilbereiche I - III gegliedert.

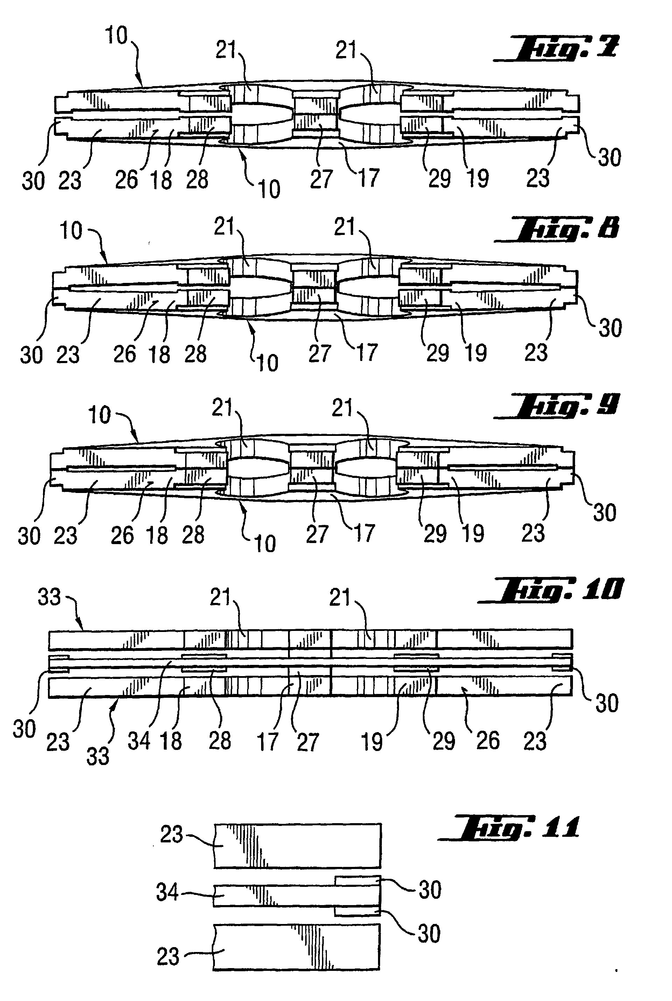

Bei kaltem Kondensatableiter befindet sich das Verschlussteil 9 in Offenstellung (Fig. 1). Die kalten Bimetallplatten 10 sind flach. In diesem Zustand liegen sie auf ihrer Seite konkaver Wölbung lediglich mit den Vorsprüngen 27 der mittleren, schmalen Wirkarme 17 aufeinander. Zwischen den Vorsprüngen 28 - 30 der übrigen Wirkarme 18, 19, 23 ist ein freier Spalt vorhanden (Fig. 3 - 5).

Fließt heißes Kondensat durch den Kondensatableiter, dann wölben sich die Bimetallplatten 10 entsprechend der herrschenden Temperatur durch. Liegt dabei der Betriebsdruck im unteren Teilbereich I, übersteigt bei Erreichen der Schließtemperatur die von den Bimetallplatten 10 über die mittleren, schmalen Wirkarme 17 ausgeübte Schließkraft die auf das Verschlussteil 9 einwirkende Öffnungskraft. Die Hübe der Bimetallplatten 10 addieren sich zu dem Gesamthub des Steuerorgans 11 und das Verschlussteil 9 wird dichtend auf dem Ventilsitz 8 zur Anlage gebracht. Auch in Schließstellung liegen im Teilbereich I lediglich die Wirkarme 17 mit ihren Vorsprüngen 27 aufeinander. Zwischen den Vorsprüngen 28 - 30 existiert nach wie vor ein freier Spalt (Fig. 7). Die Steigung der Schließkraftlinie 31 der einzelnen Bimetallplatten 10 und damit auch des gesamten Steuerorgans 11 wird durch die thermischen Eigenschaften und Federeigenschaften der schmalen Wirkarme 17 bestimmt. Sie bedingen für den Schließkraftanstieg eine relativ hohe Temperaturzunahme, was im Teilbereich I zu einer dem steilen Anstieg der Sattdampfkurve 32 gut angepassten Schließkraftlinie 31 führt (Fig. 6).

Liegt der Betriebsdruck im mittleren Teilbereich II, dann vermag die von den schmalen Wirkarmen 17 aufgebrachte Schließkraft nicht, die auf das Verschlussteil 9 einwirkende Öffnungskraft zu überwinden. Aufgrund der höheren Schließtemperatur kommen dann aber auch zusätzlich die breiten Wirkarme 23 mit ihren etwas zurückstehenden Vorsprüngen 30 gegenseitig zur Auflage (Fig. 8). Die Schließkraft der beiden Wirkarme 23 addiert sich zu der Schließkraft der schmalen Wirkarme 17 hinzu, woraufhin der Kondensatableiter im Teilbereich II mit Erreichen der Schließtemperatur schließt. Aufgrund der Kraftaddition sowie der thermischen Eigenschaften und Federeigenschaften der breiten Wirkarme 23 weist die Schließkraftlinie 31 im Teilbereich II eine geringere Steigung auf, sodass auch dort eine gute Anpassung an die flacher verlaufende Sattdampfkurve 32 gegeben ist (Fig. 6).

Wenngleich die Vorsprünge 28, 29 der äußeren Wirkarme 18, 19 mit denen 30 der breiten Wirkarme 23 höhengleich sind, kommen sie dennoch nicht bei denselben Temperaturen zur Anlage. Dies liegt an der kürzeren Länge der Wirkarme 18, 19. Erst wenn der Betriebsdruck im oberen Teilbereich III liegt, kommen aufgrund der entsprechend höheren Temperaturen schließlich auch die äußeren, kurzen Wirkarme 18, 19 mit ihren Vorsprüngen 28, 29 ergänzend zur Anlage. Alle Wirkarme 17 - 19, 23 liegen dann mit ihren Vorsprüngen 28 - 30 aufeinanderliegen. Die Schließkräfte der Wirkarme 18, 19 addieren sich zu denen der übrigen Wirkarme 17, 23 hinzu. Dadurch schließt der Kondensatableiter auch im Teilbereich III mit Erreichen der dem Betriebsdruck zugehörigen Schließtemperatur. Die Steigung der Schließkraftlinie 31 ist im Teilbereich III weiter verringert, mit dem Erfolg einer guten Anpassung an die dort noch flacher verlaufende Sattdampfkurve 32.

Die Bimetallplatten 10 sind in ihrer Form weitgehend an eine kreisrunde Platte angenähert, die mit den Schlitzen 21 nur geringe Aussparungen aufweist. Die Bimetallplatten 10 können daher bei kleinen, nicht ausladenden Baumaßen relativ große Schließkräfte aufbringen. Jede Bimetallplatte 10 weist eine der Sattdampfkurve 32 über eine großen Druckbereich (Teilbereich I - III) gut angepasste Schließkraftlinie 31 auf. Zudem ist die Plattenform vollständig symmetrisch, gleiche Bimetallplatten 10 können wechselseitig übereinandergeschichtet werden. Das Steuerorgan 11 lässt sich mithin aus völlig gleichen Bimetallplatten 10 bilden.

Die Fig. 10 und 11 zeigen eine alternative Ausbildung der Bimetallplatten 33. Hinsichtlich der Gestaltung der Wirkarme 17 - 19, 23 gleichen sie den Bimetallplatten 10. Jedoch fehlen den Bimetallplatten 33 die Vorsprünge an den Enden ihrer Wirkarme 17 - 19, 23. Die Enden der Wirkarme 17 - 19, 23 sind zueinander alle höhengleich angeordnet. Zwischen den einander zugewandten, sich konkav wölbenden Seiten der Bimetallplatten 33 ist jeweils ein Zwischenlegeelement 34 angeordnet. Dieses weist beidseitig die Vorsprünge 27 - 30 für die Abstützung der Wirkarme 17 - 19, 23 auf. Der Höhenversatz der Vorsprünge 27 - 30 entspricht dem Höhenversatz der Vorsprünge 27 - 30 an den Bimetallplatten 10. Die Bimetallplatten 33 und die Zwischenlegeelemente 34 sind gegen gegenseitiges Verdrehen gesichert, beispielsweise durch die Führungsstifte 14. Die Funktion entspricht der zuvor für die Bimetallplatten 10 beschriebenen.

Alternativ zu den Führungsstiften 14 könnten die Zwischenlegeelemente 34 verdrehsichernde Teile aufweisen, z. B. neben zwei oder mehreren Wirkarmen 17 - 19, 23 hochstehende Zungen. Die Zwischenlegeelemente 34 können im übrigen als ebene Platten mit einer den Bimetallplatten 33 gleichen Form, wie sie aus Fig. 2 ersichtlich ist, ausgebildet werden. Möglich wäre es aber auch, die Zwischenlegeelemente 34 als geschlossene Platten ohne Schlitze auszubilden.

Wenngleich nur ein Höhenversatz zwischen den Vorsprüngen 27 einerseits und den Vorsprüngen 28 - 30 andererseits in den Ausführungsbeispielen gezeigt wurde, können durchaus auch mehrere Höhenunterschiede zwischen den Vorsprüngen 27 - 30 vorgesehen werden.

### Bezugszeichenliste:

- 1: Trennwand
- 2: Vordruckseite
- 3: Niederdruckseite
- 4: Verbindungsbohrung
- 5: Sitzbuchse
- 6: Zuflussbohrung
- 7: Längsbohrung
- 8: Ventilsitz
- 9: Verschlussteil
- 10: Bimetallplatten
- 11: Steuerorgan
- 12: Mitnehmer
- 13: Hubschaft
- 14: Führungsstifte
- 15: Zentralbohrung
- 16: Führungsbohrung
- 17 - 19: Wirkarm
- 20: Mittellinie
- 21: Schlitz
- 22: Mittellinie
- 23: Wirkarm
- 24: Mittelpunkt
- 25: Kreis
- 26: Gerade
- 27 - 30: Vorsprung
- 31: Schließkraftlinie
- 32: Sattdampfkurve
- 33: Bimetallplatte
- 34: Zwischenlegeelement

## Patentansprüche

1. Bimetallgesteuerter Kondensatabieiter mit
• einem Ventilsitz (8),
• einem damit zusammenwirkenden, durch den Vordruck im Öffnungssinn belasteten Verschlusstell (9) und
• einem vordruckseitig angeordneten, im Schließsinn auf das Verschlussteil (9) einwirkenden Steuerorgan (11), das mindestens zwei übereinandergeschichtete, sich bei Temperaturanstieg durchwölbende Bimetallplatten (10) aufweist, die zur Bildung mehrerer Wirkarme (17 - 19, 23) geschlitzt sind, und
• auf der Seite konkaver Durchwölbung der Bimetallplatten (10, 33) Abstützflächen (27 - 30) für die Enden der Wirkarme (17 - 19, 23) vorgesehen sind, und
• die Bimetallplatten (10) eine Schließkraftlinie (31) mit einem der Sattdampfkurve (32) des abzuleitenden Kondensats angepassten Verlauf aufweisen,
**dadurch gekennzeichnet, dass**
• die Abstützflächen (27) für die Enden mindestens zweier Wirkarme (17) gegenüber den Abstützflächen (28 - 30) für die Enden der anderen Wirkarme (18, 19, 23) so höhenversetzt sind, dass die Enden der Wirkarme (17- 19, 23) bei unterschiedlichen Temperaturen zur Abstützung kommen.

2. Bimetallgesteuerter Kondensatableiter nach Anspruch 1, **dadurch gekennzeichnet, dass**
• die Abstützflächen als Vorsprünge (27 - 30) ausgebildet sind und
• die Vorsprünge (27 - 30) entsprechend dem Höhenversatz der Abstützflächen unterschiedliche Höhe gegenüber der Bimetallplatte (10) aufweisen.

3. Bimetallgesteuerter Kondensatableiter nach Anspruch 2, **dadurch gekennzeichnet, dass** die Vorsprünge (27 - 30) durch Prägen der Enden der Wirkarme (17 - 19, 23) gebildet sind.

4. Bimetallgesteuerter Kondensatableiter nach Anspruch 2 oder 3, **dadurch gekennzeichnet, dass**
• die Bimetallplatten (10) sowohl zu einer ersten Mittellinie (20) als auch zu einer zweiten, zur ersten quer verlaufenden Mittellinie (22) symmetrisch ausgebildet sind,
• mindestens zwei Bimetallptatten (10) sich gegenläufig durchwölbend so übereinandergeschichtet sind, dass sich gleiche Wirkarme (17 - 19, 23) gegenüberliegen und
• die Bimetallplatten (10) zueinander verdrehsicher angeordnet sind.

5. Bimetallgesteuerter Kondensatableiter mit
• einem Ventilsitz (8),
• einem damit zusammenwirkenden, durch den Vordruck im Öffnungssinn belasteten Verschlussteil (9) und
• einem vordruckseitig angeordneten, im Schließsinn auf das Verschlussteil (9) einwirkenden Steuerorgan (11), das mindestens zwei übereinandergeschichtete, sich bei Temperaturanstieg durchwölbende Bimetallplatten (10) aufweist, die zur Bildung mehrerer Wirkarme (17 - 19, 23) geschlitzt sind, und die Bimetallplatten (10) eine Schließkraftlinie (31) mit einem der Sattdampfkurve (32) des abzuleitenden Kondensats angepassten Verlauf aufweisen,
**dadurch gekennzeichnet, dass**
• die Enden der Wirkarme (17-19, 23) höhengleich vorgesehen sind, und
• den Bimetallplatten (33) auf der Seite konkaver Durchwölbung Zwischenlegeelemente (34) vorgelagert sind, die höhenversetzte Abstützflächen (27 - 30) für die Enden der Wirkarme (17 - 19, 23) aufweisen, und
• die Abstützflächen (27) für die Enden mindestens zweier Wirkarme (17) gegenüber den Abstützflächen (28 - 30) für die Enden der anderen Wirkarme (18, 19, 23) so höhenversetzt sind, dass die Enden der Wirkarme (17 - 19, 23) bei unterschiedlichen Temperaturen zur Abstützung kommen.

6. Bimetallgesteuerter Kondensatableiter nach Anspruch 5, **dadurch gekennzeichnet, dass**
• die Bimetallplatten (33) und die Zwischenlegeelemente (34) zueinander verdrehsicher angeordnet sind.

7. Bimetallgesteuerter Kondensatableiter nach Anspruch 5 oder 6, **dadurch gekennzeichnet, dass**
• die Bimetallplatten (33) sowohl zu einer ersten Mittellinie (20) als auch zu einer zweiten, zur ersten quer verlaufenden Mittellinie (22) symmetrisch ausgebildet sind,
• mindestens zwei Bimetallplatten (33) sich gegenläufig durchwölbend übereinandergeschichtet sind und
• die Zwischenlegeelemente (34) beidseitig die höhenversetzten Abstützflächen (27 - 30) für die Bimetallplatten (33) aufweisen.

8. Bimetallgesteuerter Kondensatabieiter nach einem der vorhergehenden Ansprüche, **dadurch gekennzeichnet, dass**
• die Bimetallplatten (10, 33) im wesentlichen quer zu einer ersten Mittellinie (20) derart mit Schlitzen (21) versehen sind, dass die Bimetallplatten (10, 33) beiderseits der Mittellinie (20) jeweils drei im wesentlichen gleichgerichtete Wirkarme (17 - 19) nebeneinander aufweisen,
• die Bimetallplatten (10, 33) im Bereich der ersten Mittellinie (20) zwei Wirkarme (23) aufweisen, die zueinander entgegengesetzt und zu den gleichgerichteten Wirkarmen (17 - 19) quer verlaufen.

9. Bimetallgesteuerter Kondensatableiter nach Anspruch 8, **dadurch gekennzeichnet, dass**
• die mittleren (17) der gleichgerichteten Wirkarme (17 - 19) schmaler als die übrigen (18, 19, 23) und länger als die benachbarten Wirkarme (18, 19) ausgebildet sind und
• die Abstützflächen (27) für die Enden der mittleren Wirkarme (17) gegenüber denen der übrigen Wirkarme (18, 19, 23) vorstehend angeordnet sind.

10. Bimetallgesteuerter Kondensatableiter nach Anspruch 8 oder 9, **dadurch gekennzeichnet, dass** die quer zu den gleichgerichteten Wirkarmen (17 - 19) verlaufenden Wirkarme (23) länger und breiter ausgebildet sind als die äußeren (18, 19) der gleichgerichteten Wirkarme (17 - 19).

11. Bimetallgesteuerter Kondensatableiter nach einem der vorhergehenden Ansprüche, **dadurch gekennzeichnet, dass** die Breite der Wirkarme (17 - 19, 23) zum Plattenrand hin abnimmt.

12. Bimetallgesteuerter Kondensatableiter nach einem der vorhergehenden Ansprüche, **gekennzeichnet durch** eine solche Länge der Wirkarme (17 - 19, 23), dass deren Enden bis an einen um den Mittelpunkt (24) der Bimetallplatten (10, 33) geschlagenen Kreis (25) heranreichen.

13. Bimetallgesteuerter Kondensatableiter nach einem der Ansprüche 8 bis 10 , **dadurch gekennzeichnet, dass** die Außenkontur der Bimetallplatten (10, 33) zwischen dem Ende der äußeren (18, 19) der gleichgerichteten Wirkarme (17 - 19) und dem benachbarten quer dazu verlaufenden Wirkarm (23) als schräg zur ersten Mittellinie (20) verlaufende Gerade (26) ausgebildet ist.

14. Bimetallgesteuerter Kondensatableiter nach einem der vorhergehenden Ansprüche, **dadurch gekennzeichnet, dass** der Höhenversatz der Abstützflächen (27 - 30) einen Bruchteil der Dicke der Bimetallplatte (10, 33) beträgt.

15. Bimetallgesteuerter Kondensatableiter nach einem der vorhergehenden Ansprüche, **dadurch gekennzeichnet, dass** die Bimetallplatten (10, 33) entlang der ersten Mittellinie (20) einen schlitzfreien Bereich in einer Breite aufweisen, die größer ist als die Länge der Schlitze (21).

16. Bimetallgesteuerter Kondensatableiter nach Anspruch 15, **dadurch gekennzeichnet, dass** die Bimetallplatten (10, 33) im schlitzfreien Bereich auf der ersten Mittellinie (20) Führungsbohrungen (16) für Führungsstifte (14) aufweisen.

## Claims

1. Bimetallic steam trap comprising
• a valve seat (8),
• a closure member (9) cooperating with said valve seat and biased in an opening direction at a preliminary pressure; and
• a control element (11) arranged on the preliminary pressure side and acting on said closure member (9) in the direction of closure, comprising at least two superimposed bimetallic plates (10) which deflect when the temperature rises and are slotted to form a plurality of active arms (17 to 19, 23), and
• support faces (27 to 30) are provided on the concavely curved side of the bimetallic plates for the ends of the active arms (17 to 19, 23), and the bimetallic plates (10) have a closing force curve (31) with a course adapted to the saturated vapour curve (32) of the steam to be trapped,
**characterised in that**
• the support faces (27) for the ends of at least two active arms (17) are offset in height relative to the support faces (28 to 30) for the ends of the other active arms (18, 19, 23) such that the ends of the active arms (17 to 19, 23) are supported at different temperatures.

2. Bimetallic steam trap according to claim 1, **characterised in that**
• the support faces are constructed as projections (27 to 30) and
• the projections (27 to 30) have different heights relative to the bimetallic plate (10) in accordance with the offset in height of the support faces.

3. Bimetallic steam trap according to claim 2, **characterised in that** the projections (27 to 30) are formed by embossing the ends of the active arms (17 to 19, 23).

4. Bimetallic steam trap according to claim 2 or 3, **characterised in that**
• the bimetallic plates (10) are symmetrical in design about both a first centre line (20) and a second centre line (22) extending transversely to the first,
• at least two bimetallic plates (10) are superimposed with opposing deflection such that identical active arms (17 to 19, 23) face one another and
• the bimetallic plates (10) are arranged so that they are non-rotatable relative to each other.

5. Bimetallic steam trap comprising
• a valve seat (8),
• a closure member (9) cooperating with said valve seat and biased in an opening direction at a preliminary pressure, and
• a control element (11) arranged on the preliminary pressure side and acting on said closure member (9) in the direction of closure, comprising at least two superimposed bimetallic plates (10) which deflect when the temperature rises and are slotted to form a plurality of active arms (17 to 19, 23), and the bimetallic plates (10) have a closing force curve (31) with a course adapted to the saturated vapour curve (32) of the steam to be trapped,
**characterised in that**
• the ends of the active arms (17 to 19, 23) are provided at the same height, and
• inserts (34) preceding the bimetallic plates (33) on the concavely curved side and comprising the support faces (27 to 30) which are offset in height, for the ends of the active arms (17 to 19, 23), and
• the support faces (27) for the ends of at least two active arms (17) are offset in height relative to the support faces (28 to 30) for the ends of the other active arms (18, 19, 23) such that the ends of the active arms (17 to 19, 23) are supported at different temperatures.

6. Bimetallic steam trap according to claim 5, **characterised in that** the bimetallic plates (33) and the inserts (34) are arranged so as to be non-rotatable relative to each other.

7. Bimetallic steam trap according to claim 5 or 6, **characterised in that**
• the bimetallic plates (33) are symmetrical in design about both a first centre line (20) and a second centre line (22) extending transversely to the first,
• at least two bimetallic plates (33) are superimposed with opposing deflection and
• the inserts (34) have support faces (27 to 30) which are offset in height on both sides for the bimetallic plates (33).

8. Bimetallic steam trap according to any one of the preceding claims, **characterised in that**
• the bimetallic plates (10, 33) are provided with slots (21) substantially transverse to a first centre line (20) such that the bimetallic plates (10, 33) on either side of the centre line (20) each have three substantially same-direction active arms (17 to 19) next to one another,
• the bimetallic plates (10, 33) have, in the region of the first centre line (20), two active arms (23) which extend in opposite directions to one another and transversely to the same-direction active arms (17 to 19).

9. Bimetallic steam trap according to claim 8, **characterised in that**
• the central (17) active arms of the same-direction active arms (17 to 19) are narrower than the other active arms (18, 19, 23) and longer than the adjacent active arms (18, 19), and
• the support faces (27) for the ends of the central active arms (17) are arranged so as to project beyond those of the other active arms (18, 29, 23).

10. Bimetallic steam trap according to claim 8 or 9, **characterised in that** the active arms (23) extending transversely to the same-direction active arms (17 to 19) are longer and wider in design than the outer active arms (18, 19) of the same-direction active arms (17 to 19).

11. Bimetallic steam trap according to any one of the preceding claims, **characterised in that** the width of the active arms (17 to 19, 23) decreases toward the edge of the plate.

12. Bimetallic steam trap according to any one of the preceding claims, **characterised by** a length of the active arms (17 to 19, 23) such that their ends extend to a circle (25), around the centre (24) of the bimetallic plates (10, 33).

13. Bimetallic steam trap according to any one of claims 8 to 10, **characterised in that** the external contour of the bimetallic plates (10, 33) between the end of the outer active arms (18, 19) of the same-direction active arms (17 to 19) and the adjacent active arm (23) extending transversely thereto is formed as a straight line (26) extending obliquely to the first centre line (20).

14. Bimetallic steam trap according to any one of the preceding claims, **characterised in that** the offset in height of the support faces (27 to 30) is a fraction of the thickness of the bimetallic plate (10, 33).

15. Bimetallic steam trap according to any one of the preceding claims, **characterised in that** that the bimetallic plates (10, 33) comprise, along the first centre line (20), a slot-free region having a width which is greater than the length of the slot (21).

16. Bimetallic steam trap according to claim 15, **characterised in that** the bimetallic plates (10, 33) have guide bores (16) for guide pins (14) in the slot-free region on the first centre line (20).

## Revendications

1. Purgeur de vapeur à commande bimétallique comportant :
- un siège de soupape (8),
- une pièce de fermeture (9) coopérant avec le siège et sollicitée par une précontrainte dans le sens de l'ouverture, ainsi qu'
- un organe de commande (11) agissant sur l'organe d'obturation (9) dans le sens de la fermeture, du côté de la précontrainte. cet organe de commande ayant au moins deux plaques bimétalliques (10), superposées, et qui fléchissent lorsque la température augmente, ces plaques étant fendues pour former plusieurs branches actives (17-19, 23), avec
- du côté de la courbure de flexion concave des plaques bimétalliques (10. 33). des surfaces d'appui (27-30) pour les extrémités des branches actives (17-19, 23), telles que
- les plaques bimétalliques (10) comportent une ligne de force de fermeture (31) dont le tracé est adapté à la courbe de saturation de vapeur (32) du condensat à évacuer,
**caractérisé en ce que**
les surfaces d'appui (27) des extrémités d'au moins deux branches actives (17) sont décalées en hauteur par rapport aux surfaces d'appui (28-30) des extrémités des autres branches actives (18, 19, 23), de sorte que les extrémités des branches actives (17-19. 23) viennent en appui à des températures différentes.

2. Purgeur de vapeur à commande bimétallique selon la revendication 1,
**caractérisé en ce que**
- les surfaces d'appui sont réalisées sous la fonne de parties en saillie (27-30) et
- les parties en saillie (27-30) ont une hauteur différente par rapport à la plaque bimétallique (10), en fonction du décalage en hauteur des surfaces d'appui.

3. Purgeur de vapeur à commande bimétallique selon la revendication 2,
**caractérisé en ce que**
les parties en saillie (27-30) sont réalisées par matriçage des extrémités des branches actives (17-19, 23).

4. Purgeur de vapeur à commande bimétallique selon la revendication 2 ou 3.
**caractérisé en ce que**
- les plaques bimétalliques (10) sont réalisées de manière symétrique à la fois par rapport à une première ligne centrale (20) et par rapport à une seconde ligne centrale (22) transversale par rapport à la première,
- au moins deux plaques bimétalliques (10) sont et superposées cintrées en opposition de sorte que les mêmes branches actives (17-19, 23) sont en opposition, et
- les plaques bimétalliques (10) sont bloquées en rotation les unes par rapport aux autres.

5. Purgeur de vapeur à commande bimétallique comportant
- un siège de soupape (8).
- un organe de fermeture (9) sollicité par une précontrainte dans le sens de l'ouverture et coopérant avec le siège de soupape et
- un organe de commande (11) agissant sur l'organe de fermeture (9) dans le sens de la fermeture, du côté de la précontrainte, cet organe ayant au moins deux plaques bimétalliques (10). superposées, qui se cintrent sous l'effet d'une augmentation de température et qui sont fendues pour former plusieurs branches actives (17-19. 23), de sorte que les plaques bimétalliques (10) ont une ligne de force de fermeture (31) dont le profil est adapté à celle de la courbe de vapeur saturée (32) du condensat à évacuer,
**caractérisé en ce que**
- les extrémités des branches actives (17-19, 23) sont prévues à la même hauteur,
- les plaques bimétalliques (33) comportent des éléments intermédiaires (34) prévus sur le côté du cintrage concave, et qui ont des surfaces d'appui (27-30) décalées en hauteur pour les extrémités des branches actives (17-19, 23) et
- les surfaces d'appui (27) des extrémités d'au moins deux branches actives (17) sont décalées en hauteur par rapport aux surfaces d'appui (28-30) des extrémités des autres branches actives (18, 19, 23) de façon que les extrémités des branches actives (17-19, 23) viennent en appui à des températures différentes.

6. Purgeur de vapeur à commande bimétallique selon la revendication 5.
**caractérisé en ce que**
les plaques bimétalliques (33) et les éléments intermédiaires (34) sont bloqués en rotation les uns par rapport aux autres.

7. Purgeur de vapeur à commande bimétallique selon la revendication 5 ou 6,
**caractérisé en ce que**
- les plaques bimétalliques (33) sont symétriques à la fois par rapport à une première ligne médiane (20) et par rapport à une seconde ligne médiane (22) transversale par rapport à la première.
- au moins deux plaques bimétalliques (33) sont superposées et présentent un cintrage opposé et
- les éléments Intermédiaires (34) ont des surfaces d'appui (27-30) décalées en hauteur des deux côtés pour les plaques bimétalliques (33).

8. Purgeur de vapeur à commande bimétallique selon l'une des revendications précédentes.
**caractérisé en ce que**
- les plaques bimétalliques (10, 33) sont munies de fentes (21) essentiellement transversales à la première ligne médiane (20) de sorte que les plaques bimétalliques (10, 33) présentent de part et d'autre de la ligne médiane (20), chaque fols trois branches actives (17-19) essentiellement dirigées dans le même sens, et
- les plaques bimétalliques (10, 33) comportent au niveau de leur première ligne médiane (20), deux branches actives (23) opposées l'une à l'autre et transversales par rapport aux branches actives (17-19) de même sens.

9. Purgeur de vapeur à commande bimétallique selon la revendication 8,
**caractérisé en ce que**
- les branches actives intermédiaires (17) des branches de même sens (17-19) sont plus étroites que les autres branches (18. 19, 23) et plus longues que les branches actives voisines (18, 19), et
- les surfaces d'appui (27) des extrémités des branches actives intermédiaires (17) sont en saillie par rapport aux autres branches actives (18, 19, 23).

10. Purgeur de vapeur à commande bimétallique selon la revendication 8 ou 9.
**caractérisé en ce que**
les branches actives (23) transversales par rapport aux branches actives de même direction (17-19) sont plus longues et plus larges que les branches actives (17-19) de même direction, extérieures (18, 19).

11. Purgeur de vapeur à commande bimétallique selon l'une des revendications précédentes,
**caractérisé en ce que**
la largeur des branches actives (17-19, 23) diminue vers le bord des plaques.

12. Purgeur de vapeur à commande bimétallique selon l'une des revendications précédentes,
**caractérisé par**
une longueur des branches actives (17-19, 23) telle que leurs extrémités arrivent jusqu'à un cercle (25) centré sur le centre (24) des plaques bimétalliques (10, 33).

13. Purgeur de vapeur à commande bimétallique selon l'une des revendications 8 à 10,
**caractérisé en ce que**
le contour extérieur des plaques bimétalliques (10, 33) entre les extrémités des branches extérieures (18, 19) parmi les branches actives (17-19) de même direction et le bras actif (23) dirigé transversalement, sont réalisés sous la forme d'une droite (26) inclinée par rapport à la première ligne médiane (20).

14. Purgeur de vapeur à commande bimétallique selon l'une des revendications précédentes,
**caractérisé en ce que**
le décalage en hauteur des surfaces d'appui (27-30) correspond à une fraction de l'épaisseur des plaques bimétalliques (10, 33).

15. Purgeur de vapeur à commande bimétallique selon l'une des revendications précédentes.
**caractérisé en ce que**
les plaques bimétalliques (10, 33) ont, le long de leur première ligne médiane (20), une zone sans fente dans leur largeur, cette zone étant plus grande que la longueur des fentes (21).

16. Purgeur de vapeur à commande bimétallique selon la revendication 15.
**caractérisé en ce que**
les plaques bimétalliques (10, 33) présentent dans la zone sans fente des perçages de guidage (16) sur la première ligne médiane (20) pour des broches de guidage (14).
